# FASCICULE DE BREVET EUROPEEN

(11) **EP 1 467 283 B1**
(45) Date de publication et mention de la délivrance du brevet: **29.04.2009**
(21) Numéro de dépôt: 04290550.5
(22) Date de dépôt: 01.03.2004
(51) Int. Cl.: G06F 11/14

(54) **Système de sauvegarde centralisée d'informations.**
Zentralisiertes Datensicherungssystem
Centralised information backup system

(30) Priorité: 08.04.2003 FR 0304353
(43) Date de publication de la demande: 13.10.2004
(73) Titulaire: Regie Autonome des Transports Parisiens RATP, 75599 Paris Cedex 12 (FR)
(72) Inventeur: Tramaux, Jacques, 93110 Rosny sous Bois (FR)
(74) Mandataire: Habasque, Etienne J. Jean-François

(56) Documents cités:
- US-A- 5 574 906
- US-A- 5 765 173
- COMPUTER ASSOCIATES: "BrightStor ARCserve Backup for Small Business Server -- Features, Descriptions, Benfits" INTERNET ARTICLE, [Online] 2001, pages 1-5, XP002252082 Extrait de l'Internet: URL:http://www3.ca.com/Files/BrochuresAndD escriptions/bab_sbs_fdb.pdf> [extrait le 2003-08-22]
- W. QUINN ASSOCIATES, INC.: "Managing Server Content To Ensure Windows NT/2000 Server Performance - White Paper" INTERNET ARTICLE, [Online] septembre 2000 (2000-09), pages 1-7, XP002252083 Extrait de l'Internet: URL:http://www.lyonware.co.uk/PDFs/SC-WHIT E/serverperformance.pdf> [extrait le 2003-08-22]
- SNAP APPLIANCES, INC.: "Workstation Backup Made Easy with DataKeeper Snap Edition -- White Paper" INTERNET ARTICLE, [Online] 2001, pages 1-5, XP002252084 Extrait de l'Internet: URL:http://www.sxl.net/solutions/snapserve r/workstation-backup.pdf> [extrait le 2003-08-22]

## Description

La présente invention concerne un système de sauvegarde centralisée du type permettant de sauvegarder des informations contenues localement dans un ou plusieurs terminaux, reliés à un réseau de transfert d'informations, dans des moyens de stockage accessibles au travers de ce réseau. Un tel système est connu de US 5,574,906. Ce système ne prévoit pas le stockage des informations sélectionnées pour la sauvegarde dans des zones de mémoire de capacité prédéterminée des moyens de stockage, chacune associées à un identifiant d'utilisateur d'un terminal.

Dans certains systèmes existants, le réseau de transfert d'informations est géré par un serveur central qui scrute périodiquement les terminaux connectés au réseau pour récupérer dans ceux-ci des informations à sauvegarder.

Cependant, si un terminal n'est pas disponible lors de la scrutation, tel que par exemple un terminal éteint ou un terminal portable débranché du réseau, les informations qu'il contient ne sont pas sauvegardées, de sorte que de tels systèmes ne sont pas fiables.

Dans d'autres systèmes, le ou chaque terminal comporte localement des moyens logiciels de sauvegarde.

Ces moyens de sauvegarde sont paramétrables, de sorte qu'il revient à l'utilisateur du terminal de déterminer les informations à sauvegarder, les moyens de sauvegarde à utiliser, ainsi que tous les autres paramètres de fonctionnement du système.

Pour être rapide et efficace, ces systèmes requièrent un niveau de compétence élevé au niveau des utilisateurs des différents terminaux sans lequel de grandes quantités d'informations sont sauvegardées, en raison du fait que l'utilisateur ne peut effectuer de sélection appropriée des informations à sauvegarder. Cela aboutit à la monopolisation des ressources du terminal durant des périodes de temps importantes, ce qui requiert beaucoup de mémoire, est peu pratique et peu convivial.

De plus, il est difficile d'amener tous les utilisateurs d'un même système à effectuer leurs sauvegardes de manière uniforme.

Il apparaît donc qu'aujourd'hui aucun système de sauvegarde ne permet d'effectuer de sauvegarde de manière simple et rapide pour l'utilisateur, tout en étant uniformisé et fiable dans son ensemble.

Le but de l'invention est de résoudre ces problèmes.

La présente invention a pour objet un système de sauvegarde centralisée d'informations conforme à la revendication 1

D'autres caractéristiques de l'invention apparaissent dans les revendications dépendantes.

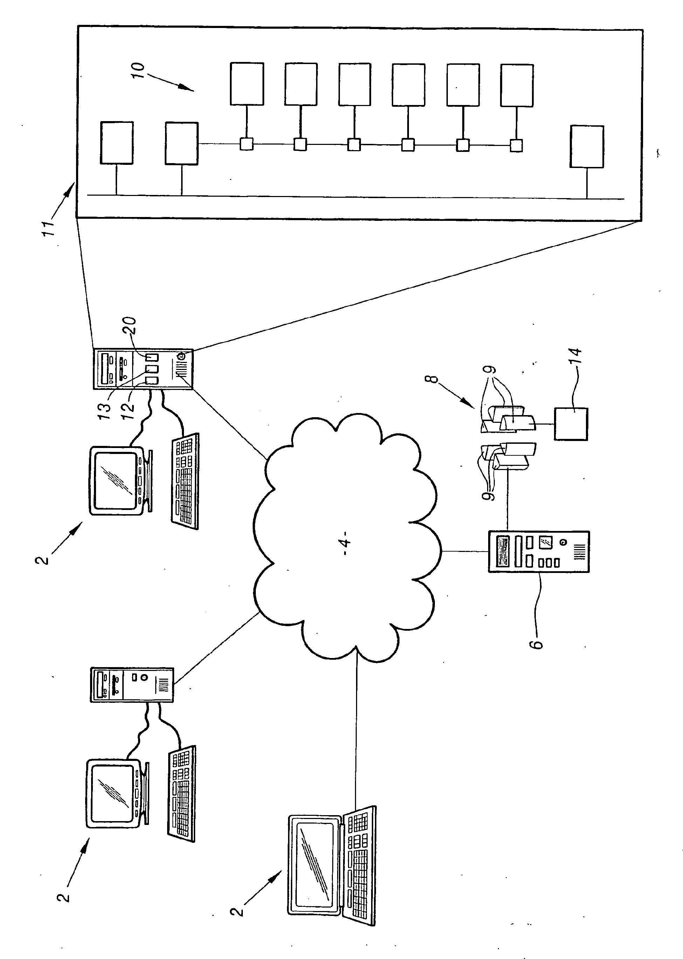

L'invention sera mieux comprise à la lecture de la description qui va suivre, donnée uniquement à titre d'exemple et faite en se référant au dessin annexé, qui représente un schéma synoptique d'un système de sauvegarde selon l'invention.

Sur cette figure, on a représenté une pluralité de terminaux tels que des micro-ordinateurs de type classique ou encore des ordinateurs portables, chacun désigné par la référence numérique générale 2.

Les terminaux 2 sont tous connectés à un réseau de transfert d'informations 4 tel que par exemple un réseau informatique interne dit Ethernet.

Le système comporte également un serveur informatique 6 relié au réseau 4 et qui gère de manière classique des moyens de stockage d'informations 8, tels qu'une base de données centrale formée d'une pluralité de zones de mémoire 9 de tailles prédéterminées.

Chaque terminal 2 contient de manière classique des informations 10 telles que des données stockées dans un ensemble de fichiers 11 organisé de manière arborescente en répertoires. Chaque fichier comporte une extension de nom représentative de la nature des informations qu'il contient, telles que par exemple « .exe » pour des logiciels exécutables et « .txt », pour des fichiers de texte.

Selon l'invention, chaque terminal 2 comporte localement des moyens 12 paramétrables de sélection d'une partie à sauvegarder des informations 10 et des moyens 13 de copie des informations sélectionnées dans les moyens de stockage 8 distants.

De plus, le serveur central 6 comporte, dans des moyens de mémorisation formés, dans le mode de réalisation décrit, par les moyens de stockage 8, des informations communes de paramétrage 14 utilisables lors d'une opération de sauvegarde.

Ainsi, lors du déclenchement d'une opération de sauvegarde, les moyens 12 de sélection d'informations d'un terminal 2 connecté au réseau 4, interrogent le serveur 6 de manière à accéder à la base de données 8 pour récupérer les informations communes de paramétrage 14.

A l'aide de ces informations de paramétrage 14, les moyens 12 de sélection contenus dans le terminal 2, sélectionnent une partie à sauvegarder des informations 10 également contenues dans le terminal 2.

Par exemple, les informations communes de paramétrage 14 désignent un ou plusieurs répertoires spécifiques du terminal 2 dans lequel les informations à sauvegarder doivent être sélectionnées.

De plus, les informations communes de paramétrage 14 contiennent des critères de filtrage à appliquer aux informations à sélectionner.

Par exemple, ces critères de filtrage contiennent une liste des extensions de fichiers qui ne doivent pas être sauvegardés.

Ainsi, des extensions de fichiers correspondant à des informations de nature musicale, de nature visuelle ou encore à des logiciels exécutables, peuvent être exclues des informations à sauvegarder.

Par ailleurs, les informations 10 contenues sur le terminal 2 sont chacune associées de manière classique à des données de datation permettant de connaître leurs dates de création et de modification.

Ainsi, les moyens 12 de sélection d'informations peuvent déterminer quelles sont les informations modifiées et/ou créées depuis leur précédente exécution, de manière à ne sélectionner que des informations à sauvegarder parmi celles-ci, une telle sélection étant communément désignée par le terme « incrémentielle ».

Les informations sélectionnées sont ensuite automatiquement copiées par les moyens 13 à partir du terminal 2, vers les moyens de stockage 8 au travers du réseau 4 et du serveur 6.

Notamment, les informations sont sauvegardées dans une zone de mémoire 9 spécifique, associée à l'utilisateur du terminal 2 grâce à un identifiant d'utilisateur tel que par exemple le nom de l'utilisateur.

Dans l'exemple décrit, les informations sélectionnées sont sauvegardées dans leur format d'origine, afin de permettre une récupération aisée des informations sauvegardées.

L'utilisation des informations communes de paramétrage 14 permet donc de sélectionner sur chaque terminal 2 et sans intervention de l'utilisateur, un nombre restreint d'informations correspondant aux informations d'un ou plusieurs répertoires donnés, dont les extensions répondent aux critères de filtrage et qui ont été modifiés et/ou créés depuis la sauvegarde précédente. Ainsi, la mise en oeuvre des moyens de copie de ces informations dans les moyens de stockage 8 est rapide et n'entraîne pas de ralentissement au niveau de l'utilisation du terminal 2.

Avantageusement, les moyens 12 de sélection d'informations permettent également à un utilisateur de rajouter des informations de paramétrage spécifiques à ce terminal 2.

Par exemple, un utilisateur dispose de la possibilité de rajouter des extensions de fichiers correspondant à des informations à exclure de la sauvegarde.

Ainsi, un terminal 2 comprenant un logiciel spécifique générant des fichiers particuliers qu'il ne convient pas de sauvegarder, comporte des informations de filtrage permettant d'exclure ces fichiers des informations à sauvegarder.

Les moyens 12 de sélection d'informations étant essentiellement paramétrés à partir des informations communes de paramétrage 14, leur interface de mise en oeuvre au niveau de chaque terminal 2 est extrêmement simple et ne requiert aucune compétence spécifique de la part des utilisateurs.

Par exemple, cette interface comporte un unique bouton à actionner par un utilisateur pour exécuter la sauvegarde.

Afin de permettre une sauvegarde fiable, les moyens 12 de sélection d'informations sont adaptés pour proposer le déclenchement de la sauvegarde à un utilisateur, périodiquement et/ou lorsque le terminal 2 est connecté au réseau.

Par exemple, si le terminal 2 est un terminal portable, les moyens 12 de sélection d'informations sont adaptés pour proposer à l'utilisateur de déclencher une sauvegarde à chaque connexion du portable 2 au réseau de transfert d'informations 4.

Si certains fichiers d'informations sont de taille importante, par exemple supérieure à 10 Mb, ils peuvent être sauvegardés en passant par des mémoires à accès rapide ou « mémoires caches », pour être ensuite sauvegardés sans monopoliser les ressources du terminal concerné.

Avantageusement, le serveur 6 comporte des moyens d'analyse statistique de la base de données 8 afin notamment de vérifier le volume d'informations contenu dans chaque zone de mémoire 9.

Dans ce cas, chaque terminal 2 comporte des moyens d'interrogation de ces moyens d'analyse, de sorte que l'exécution des moyens 13 de copie d'informations d'un terminal 2 vers la base de données 8 peut être conditionnée par le taux d'occupation de la base de données 8 et notamment par un taux d'occupation inférieur à un seuil donné.

Ainsi, si le volume d'informations déjà présent dans la zone de mémoire 9 spécifique à l'utilisateur du terminal 2 est supérieur au seuil prédéterminé, la sauvegarde ne peut pas être effectuée et l'utilisateur est invité à supprimer des fichiers déjà mémorisés dans la zone mémoire 9.

Une telle opération de suppression peut être réalisée par le biais d'une interface spécifique ou par la mise en oeuvre de moyens classiques de gestion de fichiers.

Il apparaît donc que le système de l'invention permet d'exécuter des sauvegardes d'informations de manière simple pour un utilisateur d'un terminal, tout en effectuant ces sauvegardes de manière normalisée sur des moyens de sauvegarde centralisés.

Dans le mode de réalisation décrit, chaque terminal 2 comporte en outre des moyens 20 de scrutation de son état, associés aux moyens 12 de sélection d'informations.

Ces moyens 20 de scrutation sont adaptés pour extraire des informations relatives au terminal 2, telles que par exemple les capacités de calcul et de mémoire de ce terminal, les différents logiciels et leurs versions présentes sur ce terminal, le nom de l'utilisateur, et toute autre information relative au terminal 2.

Avantageusement, lors de la sauvegarde des informations sélectionnées, les informations extraites par les moyens de scrutation 20 sont également sauvegardées dans les moyens de stockage d'informations 8.

Ainsi, les moyens de stockage d'informations 8 contiennent des informations complètes et actuelles sur la nature et l'état de l'ensemble des terminaux 2, connectés au réseau de transfert d'informations 4.

De telles informations permettent une maintenance aisée d'un parc informatique.

Bien entendu, les informations communes de paramétrage 14 peuvent être segmentées, de sorte qu'elles comportent plusieurs groupes d'informations de paramétrage à appliquer à des groupes correspondants de terminaux 2.

Dans d'autres modes de réalisation, les moyens 12 de sélection d'informations s'exécutent de manière automatique et sans intervention d'un utilisateur du terminal.

## Revendications

1. Système de sauvegarde centralisée d'informations (10) contenues localement dans au moins un terminal (2) connecté à un réseau de transfert d'informations (4) au travers duquel le ou chaque terminal (2) est relié à un serveur central (6) et à des moyens de stockage d'informations (8), le ou chaque terminal (2) comportant des moyens (12) paramétrables de sélection d'une partie des informations (10) contenues localement dans ce terminal (2) et des moyens (13) de copie des informations sélectionnées dans lesdits moyens de stockage (8), le système étant tel que :
- ledit serveur (6) comporte des moyens de mémorisation (8) d'informations communes de paramétrage (14),
- lesdits moyens (8) de stockage d'informations comportent une pluralité de zones de mémoire (9) de capacités prédéterminées, chacune associée à un identifiant d'utilisateur,
- lesdits moyens (12) paramétrables de sélection d'informations du ou de chaque terminal (2), sont adaptés pour accéder, lors du déclenchement d'une opération de sauvegarde, auxdits moyens de mémorisation (8) d'informations communes de paramétrage (14), afin de les récupérer pour permettre la sélection d'informations (10) contenues localement dans le terminal (2) selon ces informations communes de paramétrage (14), et sauvegarder les informations sélectionnées (10) dans leur format d'origine dans une zone de mémoire des moyens (8) de stockage d'informations associée à l'identifiant de l'utilisateur du terminal (2).

2. Système selon la revendication 1, **caractérisé en ce que** lesdites informations (10) contenues localement dans chaque terminal (2) sont organisées de manière arborescente en répertoires et **en ce que** lesdites informations communes de paramétrage (14) spécifient un ou plusieurs répertoires dans le ou lesquels les moyens (12) paramétrables de sélection d'informations doivent sélectionner des informations à sauvegarder.

3. Système selon l'une quelconque des revendications 1 ou 2, **caractérisé en ce que** les informations (10) du ou de chaque terminal (2) sont stockées sous forme de fichiers informatiques comprenant des extensions spécifiant leur nature, et **en ce que** lesdites informations communes de paramétrage (14) contiennent des critères de filtrage basés sur ces extensions, pour le filtrage et la sélection des informations (10) par les moyens (12) paramétrables de sélection.

4. Système selon l'une quelconque des revendications 1 à 3, **caractérisé en ce que** lesdites informations (10) contenues localement dans le ou chaque terminal (2), sont chacune associées à des données de datation de leur création et/ou modification et **en ce que** les moyens (12) paramétrables de sélection d'informations sont adaptés pour ne sélectionner que des informations créées et/ou modifiées ultérieurement à la date de leur dernière exécution.

5. Système selon l'une quelconque des revendications 1 à 4, **caractérisé en ce que** le ou au moins un terminal (2) contient des informations de paramétrage spécifiques supplémentaires et **en ce que** les moyens (12) paramétrables de sélection d'informations du ou de ce terminal (2), sont paramétrés également en fonction de ces informations spécifiques de paramétrage.

6. Système selon l'une quelconque des revendications 1 à 5, **caractérisé en ce que** lesdits moyens (12) paramétrables de sélection d'informations, sont adaptés pour être déclenchés périodiquement.

7. Système selon l'une quelconque des revendications 1 à 6, **caractérisé en ce que** le ou chaque terminal (2) comporte des moyens (20) de scrutation de son état, adaptés pour extraire des informations relatives à la nature et/ou au fonctionnement de ce terminal (2), lesdits moyens (20) de scrutation étant associés auxdits moyens (12) de sélection d'informations, de sorte que les informations délivrées par ces moyens (20) de scrutation sont sauvegardées simultanément auxdites informations (10) sélectionnées par les moyens (12) paramétrables de sélection d'informations.

8. Système selon l'une quelconque des revendications 1 à 7, **caractérisé en ce que** ledit serveur (6) comporte des moyens d'analyse du taux d'occupation de chaque zone (9) et chaque terminal (2) comportant des moyens d'interrogation de ces moyens d'analyse, afin de recevoir des informations sur les capacités des zones de mémoire (9).

9. Système selon la revendication 8, **caractérisé en ce que** la mise en oeuvre desdits moyens (11) de copie d'informations d'un terminal (2) vers les moyens de stockage (8) est conditionnée par un volume d'informations déjà présent dans une zone de mémoire (9) spécifique à l'utilisateur du terminal (2), inférieur à un seuil prédéterminé.

## Claims

1. Centralised system (10) for protecting data contained locally in at least one terminal (2) connected to a data transfer network (4), through which the or each terminal (2) is linked to a central server (6) and to data storage means (8), wherein the or each terminal (2) comprises parameterisable means (12) for selecting a segment of the data (10) locally contained in this terminal (2) and means (13) for copying selected data in said storage means (8), wherein the system is such that:
• said server (6) comprises storage means (8) for common parameterisation data (14),
• said data storage means (8) comprise a plurality of memory zones (9) with predetermined capacities, each of which is associated with a personal identifier of the user,
• said parameterisable data selection means (12) of the or each terminal (2) are adapted to access said storage means (8) for common parameterisation data (14) on actuation of a protection operation in order to recover these to enable the selection of data (10) locally contained in the terminal (2) in accordance with these common parameterisation data (14), and protect the selected data (10) in the original format in a memory zone of the data storage means (8) associated with the personal identifier of the user of the terminal (2).

2. System according to claim 1, **characterised in that** said data (10) locally contained in each terminal (2) are organised in tree-type directories, and **in that** said common parameterisation data (14) specify one or more directories, in which the parameterisable data selection means (12) must select data to be protected.

3. System according to any one of claims 1 or 2, **characterised in that** the data (10) of the or each terminal (2) are stored in the form of data files comprising extensions specifying their nature, and **in that** said common parameterisation data (14) contain filtering criteria based on these extensions for filtering and selecting data (10) by the parameterisable selection means (12).

4. System according to any one of claims 1 to 3, **characterised in that** said data (10) locally contained in the or each terminal (2) are each associated with data dating their creation and/or modification, and **in that** the parameterisable data selection means (12) are adapted to only select data created and/or modified subsequently to the date they were last processed.

5. System according to any one of claims 1 to 4, **characterised in that** the or at least one terminal (2) contains additional specific parameterisation data, and **in that** the parameterisable data selection means (12) of the or this terminal (2) are parameterised equally on the basis of these specific parameterisation data.

6. System according to any one of claims 1 to 5, **characterised in that** said parameterisable data selection means (12) are adapted to be activated periodically.

7. System according to any one of claims 1 to 6, **characterised in that** the or each terminal (2) comprises means (20) for validating its status adapted to extract data relating to the nature and/or operation of this terminal (2), wherein said validation means (20) are associated with said data selection means (12) so that the data supplied by these validation means (20) are protected simultaneously with said data (10) selected by the parameterisable data selection means (12).

8. System according to any one of claims 1 to 7, **characterised in that** said server (6) comprises means for analysing the occupation rate of each zone (9) and each terminal (2) comprises means for polling these analysing means in order to receive data concerning the capacities of the memory zones (9).

9. System according to claim 8, **characterised in that** the implementation of said means (11) for copying data of a terminal (2) to the storage means (8) is dependent on a volume of data specific to the user of the terminal (2) that are already present in the memory zone (9) being below a predetermined threshold.

## Patentansprüche

1. System für die zentralisierte Speicherung von Informationen (10), die lokal in mindestens einem Endgerät (2) enthalten sind, das mit einem Netzwerk zur Übertragung von Informationen (4) verbunden ist, über welches das oder jedes Endgerät (2) mit einem zentralen Server (6) und mit Mitteln zum Speichern von Informationen (8) verbunden ist, wobei das oder jedes Endgerät (2) parametrisierbare Mittel (12) zum Auswählen eines Teils der Informationen (10), die lokal in dem Endgerät (2) enthalten sind, und Mittel (13) zum Kopieren der in den Speichermitteln (8) ausgewählten Informationen aufweist, wobei das System derart ist, dass:
- der Server (6) Mittel zum Speichern (8) von gemeinsamen Parametrisierungs-Informationen (14) aufweist,
- die Mittel (8) zum Speichern von Informationen eine Mehrzahl von Speicherbereichen (9) mit vorbestimmten Kapazitäten aufweisen, wobei jede mit einem Benutzer-Identifizierer verknüpft ist,
- die parametrisierbaren Mittel (12) zum Auswählen von Informationen des oder jedes Endgerätes (2) eingerichtet sind zum Zugreifen beim Auslösen eines Speichervorgangs auf die Mittel zum Speichern (8) von gemeinsamen Parametrisierungs-Informationen (14) zum Wiedergewinnen derselben zum Ermöglichen der Auswahl von Informationen (10), die lokal in dem Endgerät (2) enthalten sind, gemäß den gemeinsamen Parametrisierungs-Informationen (14), und zum Speichern der ausgewählten Informationen (10) in ihrem ursprünglichen Format in einem Speicherbereich der Mittel (8) zum Speichern von Informationen, die mit dem Identifizierer des Benutzers des Endgerätes (2) verknüpft ist.

2. System gemäß Anspruch 1, **dadurch gekennzeichnet, dass** die Informationen (10), die lokal in jedem Endgerät (2) enthalten sind, baumstrukturartig in Verzeichnissen organisiert sind, und dass die gemeinsamen Parametrisierungs-Informationen (14) ein oder mehrere Verzeichnisse spezifizieren, in dem oder in denen die parametrisierbaren Mittel (12) zum Auswählen von Informationen die zu speichernden Informationen auswählen müssen.

3. System gemäß einem der Ansprüche 1 oder 2, **dadurch gekennzeichnet, dass** die Informationen (10) des oder jedes Endgerätes (2) in Form von Computerdateien gespeichert sind, die Erweiterungen aufweisen, die ihre Art spezifizieren, und dass die gemeinsamen Parametrisierungs-Informationen (14) auf der Grundlage der Erweiterungen Filterkriterien für das Filtern und Auswählen der Informationen (10) durch die parametrisierbaren Auswahlmittel (12) enthalten.

4. System gemäß einem der Ansprüche 1 bis 3, **dadurch gekennzeichnet, dass** die Informationen (10), die lokal in dem oder in jedem Endgerät (2) enthalten sind, jeweils mit Daten zur Datierung ihrer Erzeugung und/oder Modifizierung verknüpft sind, und dass die parametrisierbaren Mittel (12) zur Auswahl von Informationen so eingerichtet sind, dass sie nur nach dem Datum ihrer letzten Ausführung erzeugte und/oder modifizierte Informationen auswählen.

5. System gemäß einem der Ansprüche 1 bis 4, **dadurch gekennzeichnet, dass** das oder mindestens ein Endgerät (2) zusätzliche spezifische Parametrisierungs-Informationen enthält, und dass die parametrisierbaren Mittel (12) zur Auswahl von Informationen des oder dieses Endgerätes (2) ebenfalls in Abhängigkeit von den spezifischen Parametrisierungs-Informationen parametrisiert werden.

6. System gemäß einem der Ansprüche 1 bis 5, **dadurch gekennzeichnet, dass** die parametrisierbaren Mittel (12) zur Auswahl von Informationen so eingerichtet sind, dass sie periodisch ausgelöst werden.

7. System gemäß einem der Ansprüche 1 bis 6, **dadurch gekennzeichnet, dass** das oder jedes Endgerät (2) Mittel (20) zur Abfrage seines Zustands aufweist, die eingerichtet sind zum Extrahieren der Informationen in Bezug auf die Art und/oder die Funktion des Endgerätes (2), wobei die Abfragemittel (20) mit den Mitteln (12) zur Auswahl von Informationen verknüpft sind, so dass die Informationen, die von den Abfragemitteln (20) bereitgestellt werden, gleichzeitig mit den Informationen (10) gespeichert werden, die von den parametrisierbaren Mitteln (12) zur Auswahl von Informationen ausgewählt werden.

8. System gemäß einem der Ansprüche 1 bis 7, **dadurch gekennzeichnet, dass** der Server (6) Mittel zur Analyse der Belegungsrate jedes Bereichs (9) aufweist, und dass jedes Endgerät (2) Mittel zur Abfrage der Analysemittel zum Erhalten der Informationen über die Kapazitäten der Speicherbereiche (9) aufweist.

9. System gemäß Anspruch 8, **dadurch gekennzeichnet, dass** das Anwenden der Mittel (11) zum Kopieren von Information von einem Endgerät (2) in Richtung zu den Speichermitteln (8) durch ein Informationsvolumen bedingt ist, das sich bereits in einer für den Benutzer des Endgerätes (2) spezifischen Speicherbereiche (9) befindet, das kleiner als eine vorbestimmte Schwelle ist.
